# EUROPÄISCHE PATENTSCHRIFT

(11) **EP 2 602 016 B1**
(45) Veröffentlichungstag und Bekanntmachung des Hinweises auf die Patenterteilung: **21.06.2017**
(21) Anmeldenummer: 12193504.3
(22) Anmeldetag: 21.11.2012
(51) Int. Cl.: B01D 46/00, B01D 46/44

(54) **Anlage zum Reinigen von Filtern und Verfahren zum Betreiben einer Anlage zum Reinigen von Filtern**
Facility for cleaning filters and method for operating a facility for cleaning filters
Installation de nettoyage de filtres et procédé d'actionnement d'une installation de nettoyage de filtres

(30) Priorität: 05.12.2011 DE 102011056062
(43) Veröffentlichungstag der Anmeldung: 12.06.2013
(73) Patentinhaber: Deichmann, Jochen, 36179 Bebra (DE)
(72) Erfinder: DEICHMANN, Jochen, 36179 Bebra (DE); DEICHMANN, Jan Thomas, 36179 Bebra (DE)
(74) Vertreter: Dantz, Jan Henning

(56) Entgegenhaltungen:
- WO-A1-03/035218
- US-A- 3 073 097
- US-A- 4 465 497
- US-A- 4 690 166
- US-B1- 6 270 732

## Beschreibung

Die vorliegende Erfindung betrifft eine Anlage zum Reinigen von Filtern, insbesondere aus textilen Filtermaterialien, mit einem Kompressor, über den ein Reinigungsgas bis auf einen Reinigungsdruck komprimierbar ist und in einen Druckbehälter geleitet werden kann, wobei an den Druckbehälter ein Reinigungsrohr angeschlossen ist, mittels dem das Reinigungsgas über Düsenöffnungen in einen Filter eingeblasen werden kann, und ein Verfahren zum Betreiben einer Anlage zum Reinigen von Filtern.

Die DE 39 39 645 offenbart eine Entstaubungsanlage mit schlauchförmigen Filterelementen, die von einem Rohgas durchströmt werden, so dass sich zu filternde Partikel an dem Filter absetzen können. Um die Filterelemente zu reinigen, wird in gewissen Intervallen ein rückströmendes Spülgas eingesetzt, das den Filter von der Reingasseite zur Rohgasseite durchströmt damit der Staub von der Außenseite der Filterelemente gelöst wird.

Ein Filterelement für eine solche Reinigungsanlage ist beispielsweise in der DE 91 03 538 beschrieben.

Bei solchen Entstaubungsanlagen erfolgt die Reinigung mit einem auf beispielsweise 6 bar komprimierten Reinigungsgas, dass dann gegenläufig in die schlauchförmigen Filterelemente eingeblasen wird. Der zur Abreinigung benötigte Druckluftstoß wird dadurch erzeugt, dass der mit nahezu Schallgeschwindigkeit aus einer Düse austretende Treibstrahl Sekundärluft aus seiner Umgebung mitreißt. Die Erzeugung eines hohen Druckes und die Drosselverluste des Reinigungsgases an den Ventilen und den Düsen sorgen jedoch für einen relativ hohen Energieverbrauch. Dabei muss berücksichtigt werden, dass Gase in einer Mündung einer Düse oder eines Ventils nur bis zum kritischen Druck, dem Laval-Druck, entspannt werden können, egal, wie tief der Gegendruck hinter der Mündung abgesenkt wird.

Die US 4,465,497 offenbart eine pneumatische Anlage zum Reinigen von Filtern, bei der über ein Membranventil ein Reinigungsgas auf einen Filter geblasen werden kann. Eine Vielzahl von Membranventilen werden über eine gemeinsame Druckkammer gespeist. Die Druckkammer besitzt am Anfang des Reinigungsvorgangs gemäß einer Angabe aus der US 4,690,166, die auf denselben Erfinder zurückgeht, einen Druck von 5,5 bar (80psi). Bei der US 4,690,166 wird bei dem Reinigungsvorgang der Druck in der Druckkammer etwa auf Umgebungsdruck entspannt.

In der US 6,270,732 ist einer Filteranlage offenbart, die mit Unterdruck betreiben wird. Das gereinigte Gas wird dann über ein Pumpe an die Umgebung abgegeben.

Es ist daher Aufgabe der vorliegenden Erfindung, eine Anlage zum Reinigen von Filtern zu schaffen, die eine effektive Reinigung der Filter bei geringem Energieverbrauch ermöglicht.

Diese Aufgabe wird mit einer Anlage zum Reinigen von Filtern mit den Merkmalen des Anspruches 1 und einem Verfahren mit den Merkmalen des Anspruches 7 gelöst.

Erfindungsgemäß ist zum Schließen des am Druckbehälter angeschlossenen Reinigungsrohres ein, bezogen auf den Reinigungsdruck des Kompressors im hauptsächlich unterkritischen Bereich arbeitendes Membranventil vorgesehen, über das das Einblasen von Reinigungsgas in den Filter gesteuert wird. Dadurch können Drosselverluste durch zu kleine Strömungsquerschnitte bzw. zu große Druckunterschiede vermieden werden. Das Membranventil arbeitet daher hauptsächlich im unterkritischen Bereich und die Strömungsquerschnitte sind so bemessen, dass nur geringe Drosselverluste auftreten. Dabei soll ein überkritischer Zustand durch einen teilgeöffneten Ventilkörper zulässig sein. Erst bei vollständig geöffnetem Ventil stellen sich unterkritische Zustände ein. Dadurch kann auch der Ausgangsdruck des Reinigungsgases abgesenkt werden, was den Energieaufwand für die Komprimierung des Reinigungsgases reduziert. Dies ermöglicht eine bedarfsgerechte Erzeugung von Druck und Menge des Reinigungsgases. Damit wird sichergestellt, dass ein Druck des Reinigungsgases nur in dem Maße erzeugt wird, wie es für den nächsten Abreinigungsvorgang notwendig ist. Zudem können kurze Ansprechzeiten des Membranventils weitere Verluste an komprimiertem Reinigungsgas vermeiden, so dass sich die Anlage besonders effizient betreiben lässt.

Vorzugsweise ist der Druck in dem Druckbehälter über eine Steuerung abhängig von dem erforderlichen Reinigungsdruck an dem Reinigungsrohr steuerbar.

Der Kompressor kann dabei den Druckbehälter direkt nach jedem Reinigungsvorgang wieder mit komprimiertem Reinigungsgas versorgen, so dass nur der in dem Druckbehälter vorhandene Gegendruck auf den Kompressor wirkt.

Ferner kann über eine Druckdifferenzmessung der Verschmutzungsgrad des Filters erfasst werden, wobei die Länge der Reinigungsintervalle abhängig von dem Verschmutzungsgrad steuerbar ist. Dadurch kann die Anlage zum Reinigen von Filtern bedarfsgerecht gesteuert werden, d.h. bei einer geringeren Verschmutzung der Filter können die Reinigungsintervalle verlängert werden und bei stärkerer Verschmutzung auch verkürzt werden. Abhängig von der notwendigen Länge der Reinigungsintervalle kann eine Steuerung die Leistung des Kompressors zur Komprimierung des Reinigungsgases in dem Druckbehälter steuern.

Vorzugsweise weist das Reinigungsrohr einen im Wesentlichen konstanten Strömungsquerschnitt auf. Das Reinigungsrohr kann dabei gebogen oder auch schlauchförmig ausgebildet sein, wobei durch den konstanten Strömungsquerschnitt Drosselverluste reduziert oder vermieden werden.

Für eine schnelle Steuerung des Membranventils ist dieses vorzugsweise auf der zum Druckbehälter abgewandten Seite an eine entlüftbare Leitung angeschlossen. Ferner kann das Membranventil auf der zum Druckbehälter abgewandten Seite über eine Leitung mit einem unter Druck stehenden Zusatzspeicher verbunden sein, so dass das Membranventil wahlweise entlüftet oder schnell geschlossen werden kann. Zur effektiven Schaltung des Membranventils ist vorzugsweise ein 3-2-Wegeventil vorgesehen, das mit einem ersten Anschluss zur Entlüftung mit einem Behälter auf Umgebungsdruck verbunden ist und mit einem zweiten Anschluss an den Zusatzspeicher zur Beaufschlagung des Membranventils mit komprimiertem Reinigungsgas angeschlossen ist.

Gemäß der Erfindung ist in dem Druckbehälter ein Reinigungsdruck zwischen 2 bar bis 4 bar, insbesondere zwischen 2 bar bis 3,5 bar vorgesehen. Dadurch kann die Anlage mit deutlich niedrigerem Druck im Druckbehälter betrieben werden als bei herkömmlichen Reinigungsanlagen. Dies verringert den Energieverbrauch des Kompressors zur Versorgung des Druckbehälters. Dabei kann in dem Druckbehälter bei einem Reinigungsvorgang der Druck um bis zu 2,5bar abfallen, was der Druckamplitude in dem Druckbehälter entspricht, und dann durch den Kompressor wieder auf den ursprünglichen Reinigungsdruck aufgeladen werden.

Zur Reduzierung des Druckluftverbrauches ist es zudem vorteilhaft, wenn die Öffnungszeit des Membranventils relativ kurz ist, dadurch werden Verluste von Reinigungsgas vermieden, die entstehen solange der Druck im Reinigungsrohr noch nicht das für die Reinigung erforderliche Niveau erreicht hat oder nicht mehr hat.

Die Erfindung wird nachfolgend anhand eines Ausführungsbeispiels mit Bezug auf die beigefügten Zeichnungen näher erläutert. Es zeigen:

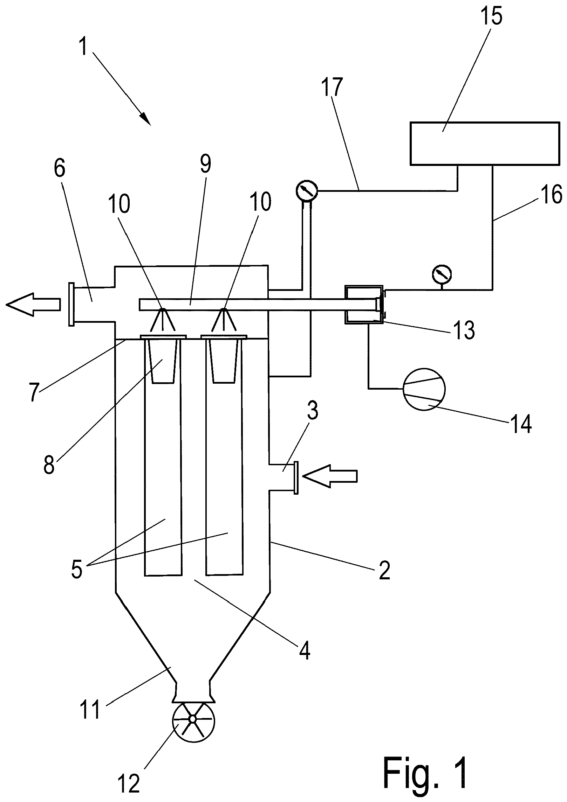

- Figur 1: eine schematische Ansicht einer erfindungsgemäßen Anlage zum Reinigen von Filtern;
- Figur 2: ein pneumatisches Schaltbild zum Betrieb der Anlage der Figur 1;
- Figur 3: ein Druck-Zeit-Diagramm über einen Reinigungszyklus;
- Figur 4: ein Druck-Zeit-Diagramm über einen Reinigungszyklus mit einem langsam schließenden Membranventil, und
- Figur 5: ein Druck-Zeit-Diagramm des Druckbehälters.

Eine Anlage 1 zur Reinigung eines Filters ist an einem Filterbehälter 2 angeordnet, der einen Einlass 3 für Rohgas aufweist, das in eine Filterkammer 4 einströmt. In der Filterkammer 4 ist eine Vielzahl von schlauchförmigen Filterelementen 5 angeordnet, die von dem Rohgas durchströmt werden, damit dann das gefilterte Rohgas als Reingas durch einen Auslass 6 die Filterkammer 4 verlassen kann. Die einzelnen Filterelemente 5 sind hängend an einer Zwischenwand 7 in der Filterkammer 4 fixiert und an einem rohrförmigen Halter 8 gelagert.

Um die einzelnen Filterelemente 5 in gewissen Intervallen zu reinigen, ist ein Reinigungsrohr 9 oberhalb der Filterelemente 5 angeordnet, an dem zu einer oberen Öffnung der Filterelemente 5 gerichtete Düsen 10 vorgesehen sind. Durch die Düsen 10 kann Reinigungsgas in die schlauchförmigen Filterelemente 5 eingeblasen werden, so dass aufgrund der kurzzeitigen Änderung der Strömungsrichtung an den Filterelementen 5 abgeschiedene Staubpartikel in der Filterkammer 4 nach unten in einen Trichter 11 fallen, an dessen Ende eine Zellenradschleuse 12 angeordnet ist.

Andere Anordnungen von Druckbehälter, Reinigungsrohr, Düsen, sowie Filterelementen sind denkbar.

Das Reinigungsrohr 9 zum Einblasen eines Reinigungsgases wird über einen Druckbehälter 13 gespeist, der über einen Kompressor 14 mit unter Druck stehendem Reinigungsgas versorgt wird. Um einen Reinigungsvorgang zu steuern, ist eine Steuerung 15 vorgesehen, die über Leitungen 16 und 17 den Druck im Druckbehälter 13 und in der Filterkammer 4 auf der Rohgasseite und der Reingasseite erfasst. Die Steuerung 15 kann zudem weitere Parameter über Sensoren erfassen.

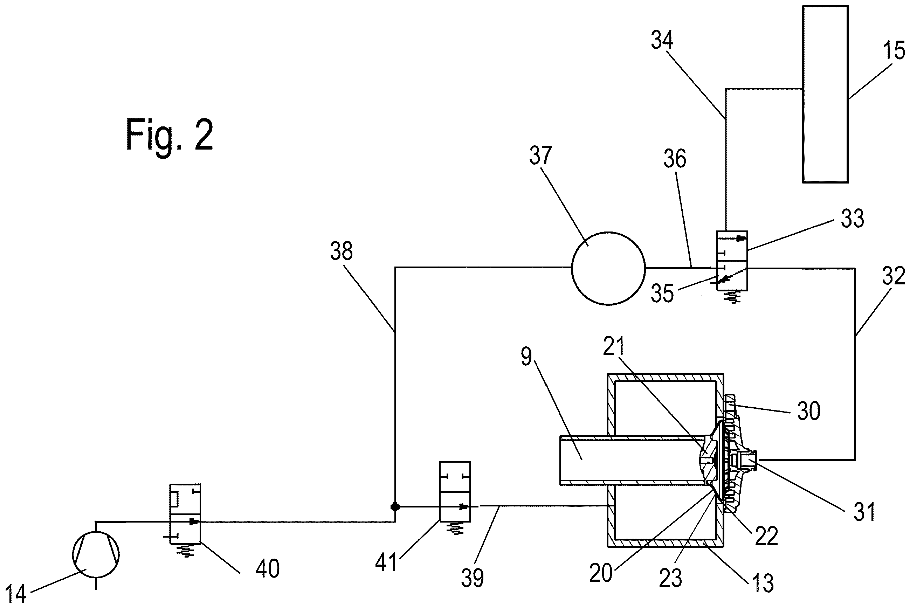

In Figur 2 ist ein Schaltbild der erfindungsgemäßen Anlage zum Reinigen der Filterelemente 5 gezeigt, wobei das Reinigungsrohr 9 nur in einem Endabschnitt dargestellt ist. Das Reinigungsrohr 9 ist stirnseitig über ein Membranventil 20 verschließbar. Das Membranventil 20 umfasst einen Ventilkörper 21, der an der Stirnseite an das Reinigungsrohr 9 andrückbar ist, um dieses zu verschließen. Der Ventilkörper 21 ist von einer elastischen Membran 23 ringförmig umgeben, die im Bereich einer Aussparung 22 an dem Druckbehälter 13 angeordnet ist. Am äußeren Umfang ist die Membran 23 über eine Abdeckung 30 an dem Druckbehälter 13 fixiert. Die Abdeckung 30 umfasst einen Anschluss 31, der über eine Leitung 32 einen Steuerraum, der zwischen der Membran 23 und der Abdeckung 30 ausgebildet ist, mit einem 3-2-Wegeventil 33 verbindet. Das 3-2-Wegeventil kann die Leitung 32 mit einer Entlüftungsleitung 35 verbinden, so dass in dem Steuerraum der Druck abfällt und sich das Membranventil 20 mit dem Ventilkörper 21 von dem Ende des Reinigungsrohres 9 abhebt. Dadurch wird die Öffnung des Reinigungsrohres 9 zur Druckkammer 13 hin geöffnet und ein in der Druckkammer 13 angeordnetes Reinigungsgas kann in das Reinigungsrohr 9 einströmen.

Das 3-2-Wegeventil 33 ist mit einer weiteren Leitung 36 an einen Zusatzspeicher 37 angeschlossen, der über eine Leitung 38 von dem Kompressor 14 gespeist wird. Wird nun über die Filtersteuerung 15, die mit einer Steuerleitung 34 mit dem 3-2-Wegeventil 33 verbunden ist, die Verbindung der Leitung 32 zur Entlüftungsleitung 35 verschlossen, öffnet sich die Verbindung von dem Zusatzspeicher 37 über die Leitung 36 und 32 zu dem Steuerraum am Anschluss 31 hin. Dadurch wird das Membranventil 20 durch Anheben des Druckes in dem Steuerraum wieder in die geschlossene Position bewegt, und der Ventilkörper 21 gegen das Ende des Reinigungsrohres 9 gedrückt.

Der Kompressor 14 ist über eine Leitung 39 mit dem Druckbehälter 13 verbunden, und kann sowohl den Druckbehälter 13 als auch den Zusatzspeicher 37 mit einem unter Druck stehenden Gas versorgen. Sowohl in der Leitung 38 zum Zusatzspeicher 37 als auch in der Leitung 39 ist ein Ventil 40 bzw. 41 zum Absperren der Leitung angeordnet.

Der Betrieb der Anlage zur Reinigung der Filterelemente 5 kann so erfolgen, dass sowohl im Druckbehälter 13 als auch im Zusatzspeicher 37 ein weitgehend konstanter Reinigungsdruck zwischen 2,5 bar und 3,5 bar erzeugt wird, beispielsweise etwa 2,8 bar. Wird nun ein Reinigungsvorgang ausgelöst, strömt zunächst ein Reinigungsgas aus dem Steuerraum zwischen Abdeckung 30 und Membran 20 über die Entlüftungsleitung 35 nach außen, um das Membranventil 20 zu öffnen. Dann strömt das Reinigungsgas aus dem Druckbehälter 13 in das Reinigungsrohr 9, wobei die Strömungsquerschnitte und die Druckverhältnisse so bemessen sind, dass die Strömung in dem unterkritischen Bereich erfolgt.

Anschließend wird aus dem Druckbehälter 13 über das Reinigungsrohr 9 und die Düsen 10 Reinigungsgas in die Filterelemente 5 eingeblasen. Auch an den Düsen 10 herrschen vorzugsweise unterkritische Strömungsverhältnisse, was indirekt über den Reinigungsdruck im Druckbehälter 13 oder die Strömungsquerschnitte an den Düsen 10 beeinflussbar ist.

Das Membranventil 20 kann nun durch Schließen des 3-2-Wegeventils 33 wieder verschlossen werden, wobei dann über den Zusatzspeicher 37 die Leitung 32 und der Steuerraum benachbart zu dem Membranventil 20 mit Druck beaufschlagt werden. Das Öffnen und Schließen des Membranventils 20 kann in einem sehr kurzen Zeitraum von beispielsweise weniger als 0,2 s, insbesondere weniger als 0,15 s, stattfinden, so dass die Strömungsverluste gering gehalten werden.

In Figur 2 ist das pneumatische Schaltbild der Anlage lediglich schematisch dargestellt. Das 3-2-Wegeventil 33 kann unmittelbar an der Abdeckung 30 angeordnet sein, um das Volumen der Leitung 32 zu minimieren und eine schnelle Ansprechzeit des Membranventils 20 zu gewährleisten. Zudem können weitere Ventile und Steuerleitungen vorgesehen sein, um die Funktion der Anlage zu gewährleisten. Die Steuerung 15 kann den Druck in sämtlichen Leitungen erfassen.

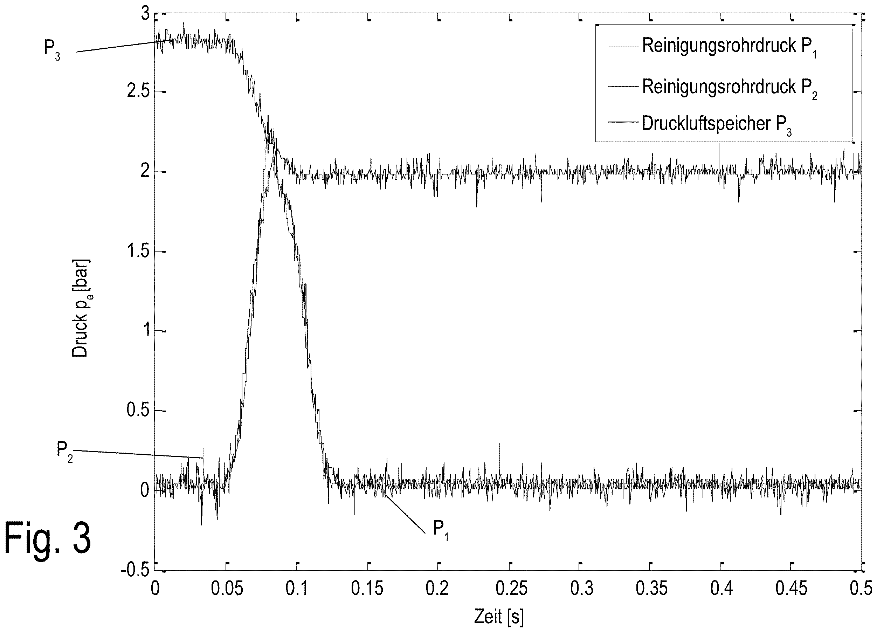

In Figur 3 ist ein Druck-Zeit-Diagramm eines Reinigungsvorganges dargestellt. Nach einem Zeitablauf von 0,05 s wird das Membranventil geöffnet, so dass sich im Reinigungsrohr 9 kurzzeitig der Druck von 0 bar (Umgebungsdruck) auf 2 bar erhöht. Durch das Öffnen des Membranventils 20 strömt das Reinigungsgas aus der Druckbehälter 13 in Reinigungsrohr 9, so dass sich der Druck in dem Druckbehälter 13 verringert, von anfangs 2,8 bar auf etwa 2 bar. Die Druckamplitude bei einem Reinigungsvorgang kann dabei in einem Bereich zwischen 0,5 bar bis 2,5 bar liegen. Dann wird das Membranventil 20 schlagartig geschlossen, und im Reinigungsrohr 9 stellt sich wieder der Anfangsdruck von 0 bar (Umgebungsdruck) ein. Der Druckbehälter 13 muss nun wieder von 2 bar auf 2,8 bar über den Kompressor 14 aufgefüllt werden. Zudem muss auch etwas Reinigungsgas in den Zusatzspeicher 37 eingeleitet werden, damit das bei der Entlüftung ausgeströmte Reinigungsgas nachgefüllt wird.

Da das Reinigungsgas nach erfolgter Abreinigung zunächst nur gegen den Restdruck im Druckbehälter 13 erzeugt werden muss und bis zum Erreichen des Reinigungsdruckes jeweils nur gegen den momentan im Druckbehälter 13 vorhandenen Druck erzeugt werden, wodurch erheblich elektrische Energie eingespart wird. Der Energieverbrauch des Kompressors 13 ist stark vom Gegendruck bzw. Druckverhältnis abhängig. Der notwendige Reinigungsdruck wird von der Filtersteuerung variiert und an die Betriebsbedingungen der Filteranlage angepasst sein.

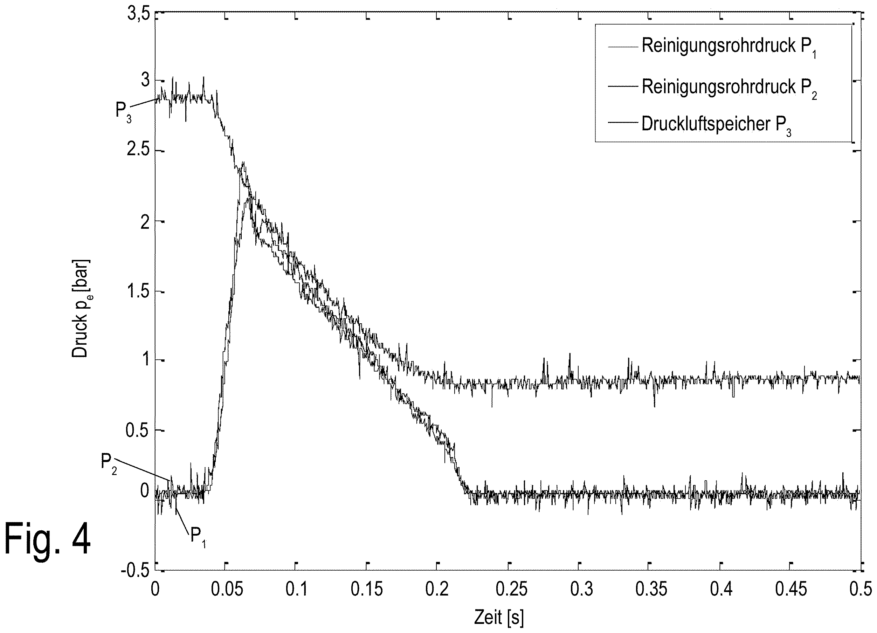

Figur 4 zeigt ein Druck-Zeit-Diagramm über einen Reinigungszyklus mit einer insgesamt zu langen Öffnungszeit. Vor dem Schließen des Magnetventiles ist der Druck im Reinigungsrohr schon unter das für die Wirksamkeit notwendige Niveau gefallen.. Die Druckamplitude im Reinigungsrohr 9 bleibt mit 2,4 bar genauso hoch wie bei dem Membranventil der Figur 3. Der Druckabfall im Druckbehälter 13 ist jedoch mit rund 2 bar erheblich. Bei Betrachtung des Schließverhaltens sieht man eine flach abfallende Kurve, die wiederum einen hohen Verlust durch unwirksames Reinigungsgas darstellt. Zudem ist erkennbar, dass aufgrund der geringen Strömungsverluste am Membranventil der Druck in dem Druckluftspeicher 13 und in dem Reinigungsrohr 9 beim Schließen des Membranventils nahezu identisch ist. Durch die analoge Messung des Druckes im Druckbehälter und die Verarbeitung des Druckes in der Steuerung ist es möglich das Membranventil rechtzeitig zu schließen und den Verlust von Reinigungsgas zu verhindern.

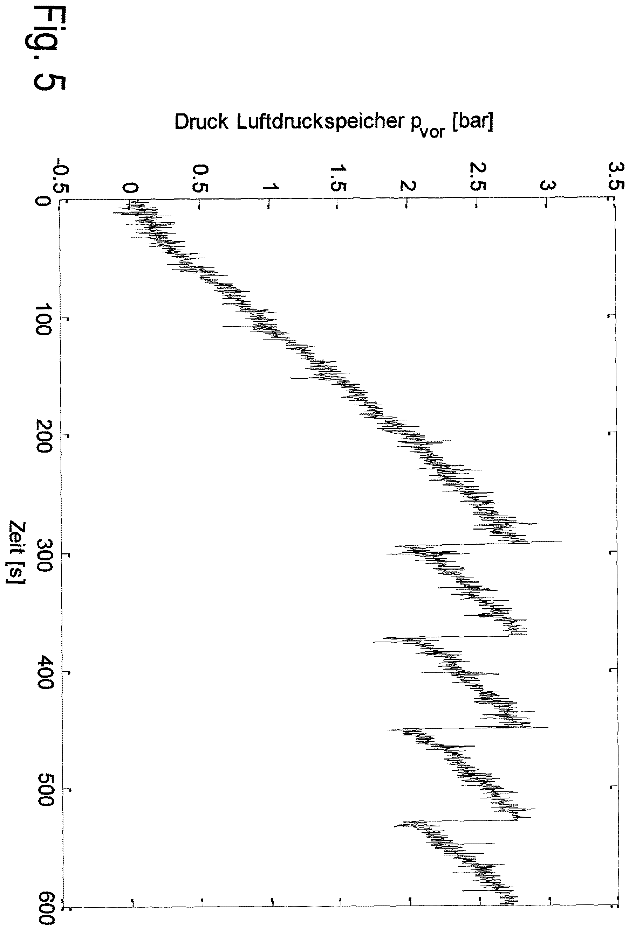

In Figur 5 ist ein Beispiel für ein Druck-Zeit-Diagramm des Druckbehälters zu Beginn mehrerer Reinigungszyklen gezeigt. Die Erzeugung der Druckluft beim ersten Befüllungsvorgang dauert ca. 295 s. Nach erfolgter Abreinigung sinkt der Vordruck im Druckluftspeicher um ca. 0,85 bar auf 1,95 bar ab. Die Erzeugung des pro Abreinigung verbrauchten Druckes dauert ca. 75 s. Damit ist die minimale Pausenzeit zwischen zwei Abreinigungsvorgängen bestimmt.

Die Filteranlage kann mittels Differenzdruckmessung den Verschmutzungs- bzw. Verstopfungsgrad an den Filterelementen 5 erfassen. Abhängig vom Verstopfungsgrad kann die Steuerung die Länge der Pausenzeit zwischen den einzelnen Abreinigungsvorgängen bestimmen, beispielsweise durch die Steuerung der Leistung des Kompressors. Die minimale Zeit zwischen zwei Abreinigungsvorgängen ist also gleich der Zeit, die der Kompresser 13 zum Erhöhen des Druckes des Reinigungsgases bis zum gewünschten Reinigungsdruck benötigt. Der Kompressor 13 kann dann für einen bestimmten Verschmutzungsgrad im Wesentlichen bei konstanter Drehzahl betrieben werden. Ferner kann über die Steuerung auch der maximale Druck im Druckluftspeicher gesteuert werden.

## Patentansprüche

1. Anlage zum Reinigen von Filtern (1), insbesondere aus textilen Filtermaterialien, mit einem Kompressor (14), über den ein Reinigungsgas bis auf einen Reinigungsdruck komprimierbar ist und in einen Druckbehälter (13) geleitet werden kann, wobei an den Druckbehälter (13) ein Reinigungsrohr (9) angeschlossen ist, mittels dem das Reinigungsgas über Düsenöffnungen (10) in einen Filter (5) eingeblasen werden kann, **dadurch gekennzeichnet, dass** zum Schließen des am Druckbehälter (13) angeschlossenen Reinigungsrohres (9) ein bezogen auf den Reinigungsdruck des Kompressors (14) hauptsächlich im unterkritischen Bereich arbeitendes Membranventil (20) vorgesehen ist, wobei der Kompressor (14) in dem Druckbehälter (13) einen Reinigungsdruck zwischen 2 bar bis 4 bar erzeugen kann und in dem Druckbehälter (13) bei einem Reinigungsvorgang der Druck um 0,5 bar bis 2,5bar abfällt und durch den Kompressor (14) nach dem Reinigungsvorgang wieder auf den ursprünglichen Reinigungsdruck erhöht wird und das Öffnen und Schließen des Membranventils (20) in einem Zeitraum von weniger als 0,2s stattfindet, wobei das Membranventil (20) auf der zum Druckbehälter (13) abgewandten Seite über eine Leitung (32, 36) mit einem unter Druck stehenden Zusatzspeicher (37) verbunden ist und der Druck in dem Zusatzspeicher (37) durch den Kompressor (14) im Wesentlichen auf dem Reinigungsdruck gehalten wird, und das Membranventil (20) auf der zum Druckbehälter (13) abgewandten Seite an eine entlüftbare Leitung (32) angeschlossen ist, wobei an der entlüftbaren Leitung (32) ein 3-2-Wegeventil (33) vorgesehen ist und das 3-2-Wegeventil (33) mit einem ersten Anschluss mit einem im Wesentlichen drucklosen Behälter oder Ausgang verbunden ist und mit einem zweiten Anschluss an den Zusatzspeicher (37) angeschlossen ist.

2. Anlage nach Anspruch 1, **dadurch gekennzeichnet, dass** der Druck in dem Druckbehälter (13) über eine Steuerung abhängig von dem erforderlichen Reinigungsdruck an dem Reinigungsrohr (9) steuerbar ist.

3. Anlage nach Anspruch 2, **dadurch gekennzeichnet, dass** über eine Druckdifferenzmessung der Verschmutzungsgrad des Filters (5) erfassbar ist und die Länge der Reinigungsintervalle abhängig von dem Verstopfungsgrad steuerbar ist.

4. Anlage nach einem der vorhergehenden Ansprüche, **dadurch gekennzeichnet, dass** die Leistung des Kompressors (14) abhängig von der Länge der Reinigungsintervalle steuerbar ist.

5. Anlage nach einem der vorhergehenden Ansprüche, **dadurch gekennzeichnet, dass** das der Kompressor (14) in dem Druckbehälter (13) einen Reinigungsdruck zwischen 2,5 bar bis 3,5 bar erzeugt.

6. Anlage nach einem der vorhergehenden Ansprüche, **dadurch gekennzeichnet, dass** das Reinigungsrohr (9) einen im Wesentlichen konstanten Strömungsquerschnitt aufweist, der größer ist als die Fläche aller Düsenöffnungen (10) an dem Reinigungsrohr (9).

7. Verfahren zum Betreiben einer Anlage zum Reinigen von Filtern (1) nach einem der vorhergehenden Ansprüche, mit einem Kompressor (14), der ein Reinigungsgas bis auf einen Reinigungsdruck komprimiert und in einen Druckbehälter (13) einleitet, wobei an den Druckbehälter (13) ein Reinigungsrohr (9) angeschlossen ist, mittels dem das Reinigungsgas über Düsenöffnungen (10) für einen Reinigungsvorgang in einen Filter (5) eingeblasen wird, zum Schließen des am Druckbehälter (13) angeschlossenen Reinigungsrohres (9) ein über eine Steuerung betätigbares Membranventil (20) vorgesehen ist, **dadurch gekennzeichnet, dass** der Kompressor (14) von der Steuerung so gesteuert wird, dass beim Öffnen des Membranventils (20) bezogen auf den Reinigungsdruck in dem Druckbehälter (13) und dem Druck im Reinigungsrohr (9) hauptsächlich unterkritische Strömungen vorhanden sind, wobei der Kompressor (14) in dem Druckbehälter (13) einen Reinigungsdruck zwischen 2 bar bis 4 bar erzeugt und in dem Druckbehälter (13) bei einem Reinigungsvorgang der Druck um 0,5 bar bis 2,5bar abfällt und durch den Kompressor (14) nach dem Reinigungsvorgang wieder auf den ursprünglichen Reinigungsdruck erhöht wird und das Öffnen und Schließen des Membranventils (20) in einem Zeitraum von weniger als 0,2s stattfindet.

8. Verfahren nach Anspruch 7, **dadurch gekennzeichnet, dass** der Kompressor (14) von der Steuerung so gesteuert wird, dass das Reinigungsgas nur in der für die nächste Reinigung notwendigen Menge und dem dazu notwendigen Druck verdichtet wird.

9. Verfahren nach Anspruch 7 oder 8, **dadurch gekennzeichnet, dass** der Kompressor (14) von der Steuerung so gesteuert wird und abhängig vom Verschmutzungsgrad die Leistung des Kompressors (14) geregelt wird.

## Claims

1. Installation for cleaning filters (1), in particular made of textile filter materials, having a compressor (14) by means of which a cleaning gas can be compressed up to a cleaning pressure and can be passed into a pressure vessel (13), wherein a cleaning pipe (9) is connected to the pressure vessel (13) by means of which the cleaning gas can be blown into a filter (5) via nozzle openings (10), **characterized in that** a membrane valve (20) operating principally in the subcritical range relative to the cleaning pressure of the compressor (14) is provided, wherein the compressor (14) can generate a cleaning pressure between 2 bar to 4 bar in the pressure vessel (13), and in the pressure vessel (13) during a cleaning process the pressure drops by 0.5 bar to 2.5 bar and after the cleaning process is increased again to the original cleaning pressure by the compressor (14), and the opening and closing of the membrane valve (20) takes place in a time interval of less than 0.2 s, wherein the membrane valve (20) is connected on the side facing away from the pressure vessel (13) via a line (32, 36) to a pressurized additional storage device (37) and the pressure in the additional storage device (37) is held substantially at the cleaning pressure by the compressor (14) and the membrane valve (20) is connected on the side facing away from the pressure container (13) to a ventable line (32) wherein a 3/2-way valve (33) is provided at the ventable line (32) and the 3/2-way valve (33) is connected with a first connection to a substantially pressureless container or output and is connected with a second connection to the additional storage device (37).

2. The installation according to claim 1, **characterized in that** the pressure in the pressure vessel (13) can be controlled by means of a controller depending on the required cleaning pressure at the cleaning pipe (9).

3. The installation according to claim 2, **characterized in that** the degree of contamination of the filter (5) can be detected by means of a difference pressure measurement and the length of the cleaning intervals can be controlled depending on the degree of clogging.

4. The installation according to any one of the preceding claims, **characterized in that** the power of the compressor (14) can be controlled depending on the length of the cleaning intervals.

5. The installation according to any one of the preceding claims, **characterized in that** the compressor (14) generates a cleaning pressure between 2.5 bar to 3.5 bar in the pressure vessel (13).

6. The installation according to any one of the preceding claims, **characterized in that** the cleaning pipe (9) has a substantially constant flow cross-section which is larger than the area of all the nozzle openings (10) on the cleaning pipe (9).

7. Method for operating an installation for cleaning filters (1) according to any one of the preceding claims, comprising a compressor (14) which compresses a cleaning gas as far as a cleaning pressure and introduces it into a pressure vessel (13), wherein a cleaning pipe (9) is connected to the pressure vessel (13), by means of which the cleaning gas is blown into a filter (5) via nozzle openings (10) for a cleaning process, a membrane valve (20) which can be actuated via a controller is provided for closing the cleaning pipe (9) connected to the pressure vessel (13), **characterized in that** the compressor (14) is controlled by the controller so that when opening the membrane valve (20) principally subcritical flows are present in relation to the cleaning pressure in the pressure vessel (13) and the pressure in the cleaning pipe (9), wherein the compressor (14) generates a cleaning pressure between 2 bar to 4 bar in the pressure vessel (13), and in the pressure vessel (13) during a cleaning process the pressure drops by 0.5 bar to 2.5 bar and after the cleaning process is increased again to the original cleaning pressure by the compressor (14), and the opening and closing of the membrane valve (20) takes place in a time interval of less than 0.2 s.

8. The method according to claim 7, **characterized in that** the compressor (14) is controlled by the controller so that the cleaning gas is only compressed in the quantity required for the next cleaning and at the pressure required for this.

9. The method according to claim 7 or 8, **characterized in that** the compressor (14) is thus controlled by the controller and the power of the compressor (14) is regulated depending on the degree of contamination.

## Revendications

1. Installation pour le nettoyage de filtres (1), en particulier fait de matériaux filtrants textiles, avec un compresseur (14) par lequel un gaz de nettoyage peut être comprimé jusqu'à une pression de nettoyage et amené dans un réservoir sous pression (13), le réservoir sous pression (13) étant raccordé à un tuyau de nettoyage (9) au moyen duquel le gaz de nettoyage peut être injecté dans un filtre (5) via des ouvertures de buse (10), **caractérisée en ce qu'**il est prévu, pour fermer le tuyau de nettoyage (9) raccordé au réservoir sous pression (13), une vanne à membrane (20) fonctionnant principalement dans la plage sous-critique par rapport à la pression de nettoyage du compresseur (14), le compresseur (14) pouvant créer dans le réservoir sous pression (13) une pression de nettoyage comprise entre 2 bars et 4 bars et la pression dans le réservoir sous pression (13) baissant de 0,5 bar à 2,5 bars pendant une opération de nettoyage et étant relevée par le compresseur (14) après l'opération de nettoyage jusqu'à la pression de nettoyage initiale et l'ouverture et la fermeture de la vanne à membrane (20) s'effectuant en moins de 0,2 s, la vanne à membrane (20) étant reliée par une conduite (32, 36), du côté opposé au réservoir sous pression (13), à un accumulateur supplémentaire (37) sous pression et la pression dans l'accumulateur supplémentaire (37) étant maintenue par le compresseur (14) sensiblement à la pression de nettoyage, et la vanne à membrane (20) étant raccordée, du côté opposé au réservoir sous pression (13), à une conduite pouvant être purgée de son air (32), la conduite pouvant être purgée de son air (32) comportant une vanne à 3-2 voies (33) et la vanne à 3-2 voies (33) étant reliée par un premier raccord à un réservoir sensiblement non pressurisé ou à une sortie et par un deuxième raccord à l'accumulateur supplémentaire (37).

2. Installation selon la revendication 1, **caractérisée en ce que** la pression dans le réservoir sous pression (13) peut être contrôlée par une commande en fonction de la pression de nettoyage nécessaire au niveau du tuyau de nettoyage (9).

3. Installation selon la revendication 2, **caractérisée en ce que** le degré d'encrassement du filtre (5) peut être déterminé par une mesure de la différence de pression et la longueur des intervalles de nettoyage peut être contrôlée en fonction du degré de colmatage.

4. Installation selon l'une des revendications précédentes, **caractérisée en ce que** la puissance du compresseur (14) peut être contrôlée en fonction de la longueur des intervalles de nettoyage.

5. Installation selon l'une des revendications précédentes, **caractérisée en ce que** le compresseur (14) crée une pression de nettoyage comprise entre 2,5 bars et 3,5 bars dans le réservoir sous pression (13).

6. Installation selon l'une des revendications précédentes, **caractérisée en ce que** le tuyau de nettoyage (9) présente une section d'écoulement sensiblement constante, qui est plus grande que l'aire de toutes les ouvertures de buse (10) du tuyau de nettoyage (9).

7. Procédé pour faire fonctionner une installation de nettoyage de filtres (1) selon l'une des revendications précédentes, avec un compresseur (14) par lequel un gaz de nettoyage peut être comprimé jusqu'à une pression de nettoyage et amené dans un réservoir sous pression (13), le réservoir sous pression (13) étant raccordé à un tuyau de nettoyage (9) au moyen duquel le gaz de nettoyage peut être injecté dans un filtre (5) via des ouvertures de buse (10) pour une opération de nettoyage, une vanne à membrane (20) pouvant être actionnée par une commande étant prévue pour fermer le tuyau de nettoyage (9) raccordé au réservoir sous pression (13), **caractérisé en ce que** le compresseur (14) est commandé par la commande de telle façon que lors de l'ouverture de la vanne à membrane (20), il se crée des écoulements principalement sous-critiques par rapport à la pression de nettoyage dans le réservoir sous pression (13) et à la pression dans le tuyau de nettoyage (9), le compresseur (14) créant dans le réservoir sous pression (13) une pression de nettoyage comprise entre 2 bars et 4 bars et la pression baissant de 0,5 bar à 2,5 bars dans le réservoir sous pression (13) lors d'une opération de nettoyage et étant augmentée par le compresseur (14) après l'opération de nettoyage jusqu'à la pression de nettoyage initiale et l'ouverture et la fermeture de la vanne à membrane (20) s'effectuant en moins de 0,2 s.

8. Procédé selon la revendication 7, **caractérisé en ce que** le compresseur (14) est contrôlé par la commande de telle façon que le gaz de nettoyage ne soit comprimé que dans la quantité nécessaire pour le nettoyage suivant et sous la pression nécessaire pour celui-ci.

9. Procédé selon la revendication 7 ou 8, **caractérisé en ce que** le compresseur (14) est contrôlé par la commande de telle façon et la puissance du compresseur (14) est régulée en fonction du degré d'encrassement.
